(19) Europäisches Patentamt
European Patent Office
Office européen des brevets

(11) EP 1 839 995 A2

(12) EUROPEAN PATENT APPLICATION

(43) Date of publication:
03.10.2007 Bulletin 2007/40

(51) Int Cl.:
B62D 5/04 (2006.01)    B62D 15/02 (2006.01)

(21) Application number: 07006398.7

(22) Date of filing: 28.03.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 30.03.2006 JP 2006093185

(71) Applicant: NSK Ltd.
Tokyo 141-8560 (JP)

(72) Inventors:
• Endo, Shuji
Maebashi-shi
Gunma 371-8527 (JP)
• Hara, Takeshi
Maebashi-shi
Gunma 371-8527 (JP)

(74) Representative: Grünecker, Kinkeldey,
Stockmair & Schwanhäusser
Anwaltssozietät
Maximilianstrasse 58
80538 München (DE)

(54) **Electric power steering device**

(57)    To provide an electric power steering device that can reliably detect the abnormality of a steering angle sensor (8) and prevent the generation of a wrong decision. When both the two differences ($|\theta a - \theta r|$, $|\theta a - \theta e|$) between an absolute steering angle value $\theta a$ obtained from a steering angle sensor (8) and a relative steering angle value $\theta r$ estimated from the rotating angle sensor (7) of a motor (5), and an estimated steering angle value $\theta e$ estimated from the induced voltage of the motor respectively exceed predetermined values (threshold values), the steering angle sensor (8) is determined to be failed.

*FIG. 1*

EP 1 839 995 A2

**Description**

BACKGROUND OF THE INVENTION

1. Field of the Invention

The present invention relates to an electric power steering device that can reliably detect the generation of an abnormality of a steering angle sensor.

2. Description of Related Art

As a fail-safe of a usual steering angle sensor, it is disclosed in Japanese Patent Unexamined Publication JP-A-2002-104211. In the structure thereof, a steering angle value is detected or calculated in accordance with a signal from a steering angle sensor provided in a steering shaft. The steering angle value is estimated in accordance with a signal from a rotating angle sensor of an actuator (motor). Then, when the di fference between the two steering angle values exceeds a predetermined value (a threshold value), the steering angle sensor is decided to be in a failure.
However, since the failure of the usual steering angle sensor is decided by the difference between the two steering angle values, even when the rotating angle sensor of the motor is failed, a problem arises that the steering angle sensor is erroneously decided to be abnormal.
The signal of the steering angle sensor is used not only for an electric power steering device, but also for a device for stabilizing the attitude of a vehicle. When the steering angle sensor is failed, this failure gives an influence on devices associated with the steering angle sensor. Therefore, a situation that the steering angle sensor is erroneouslydecided to be failed although actually the steering angle sensor is not abnormal, needs to be absolutely avoided.

SUMMARY OF THE INVENTION

The present invention is achieved by considering the above-described problems of a related art. It is an object of the present invention to provide an electric power steering device that can reliably detect the abnormality of a steering angle sensor and prevent the generation of a wrong decision.
To achieve the above-described object, according to a first aspect of the invention, there is provided an electric power steering device, comprising:

   a steering wheel to which steering torque is input;
   a steering shaft being integral with the steering wheel;
   a torque sensor that detects steering torque of the steering wheel;
   a motor that applies assist load to the steering shaft; and
   a controller that drives the motor in accordance with magnitude of the steering torque,

wherein the controller comprises:

   an absolute steering angle calculating part that calculates an absolute steering angle θa in accordance with a signal from a steering angle sensor;
   a relative steering angle calculating part that calculates a relative steering angle θr in accordance with a motor rotating angle sensor value from a motor rotating angle sensor of the motor;
   a steering angular velocity estimating part that estimates a steering angular velocity from voltage between terminals of the motor and a motor current;
   an estimated steering angle calculating part that calculates an estimated steering angle θe by integrating the steering angular velocity; and
   a comparing part that compares the difference between the absolute steering angle θa and the relative steering angle θr or the estimated steering angle θe with predetermined values respectively set thereto,

wherein the steering angle sensor is decided tobe abnormal, when following conditions are met:

   the difference between the absolute steering angle θa and the relative steering angle θr exceeds the corresponding predetermined value; and
   the difference between the absolute steering angle θa and the estimated steering angle θe exceeds the corresponding predetermined value.

According to a second aspect of the invention, it is preferable that
the absolute steering angle θa is corrected by using an initial value $\theta a_0$ of the absolute steering angle θa at a certain time,
the relative steering angle θr is corrected by using an initial value $\theta r_0$ of the relative steering angle θr at the substantially same time, and
the estimated steering angle θe is corrected by using an initial value $\theta e_0$ of the estimated steering angle θe at the substantially same time.

According to a third aspect of the invention, it is preferable that the electric power steering device as set forth in the first aspect of the invention, further comprising a wheel rotating speed sensor,
wherein an estimated value $\theta_0$ of true steering angle is estimated in accordance with a wheel rotating speed obtained by the wheel rotating speed sensor at a certain time,
the relative steering angle θr is corrected by using the difference $(\theta_0-\theta r_0)$ between the estimated value $\theta_0$ at the certain time and the initial value $\theta r_0$ of the relative steering angle θr at the substantially same time and
the estimated steering angle θe is corrected by using the difference $(\theta_0 - \theta e_0)$ between the estimated value $\theta_0$ of the true steering angle at the certain time and the initial value $\theta e_0$ of the estimated steering angle θe at the substantially same time.

According to a fourth aspect of the invention, it is preferable that the electric power steering device as set forth in the first aspect of the invention, further comprising a neutral angle estimating unit,
wherein the relative steering angle θr is corrected by using the initial value $\theta r_0$ of the relative steering angle θr at a time when the estimation of a neutral angle of the absolute steering angle by the neutral angle estimating unit is completed and the estimated steering angle θe is corrected by using the initial value $\theta e_0$ of the estimated steering angle θe at the substantially same time.

According to a fifth aspect of the invention, there is provided an electric power steering device comprising:

a steering wheel to which steering torque is input;
a steering shaft being integral with the steering wheel;
a torque sensor that detects steering torque of the steering wheel;
a motor that applies assist load to the steering shaft; and
a controller that drives the motor in accordance with magnitude of the steering torque,

wherein the controller comprises:

a first steering angular velocity calculating art that calculates a steering angular velocity ωa in accordance with a signal from a steering angle sensor;
a second steering angular velocity calculating part that calculates a steering angular velocity ωm in accordance with a motor rotating angle sensor value from a motor rotating angle sensor of the motor;
a steering angular velocity estimating part that estimates a steering angular velocity we from voltage between terminals of the motor and a motor current; and
a comparing part that compares difference between the steering angular velocity ωa by the steering angle sensor and the steering angular velocity ωm by the motor rotating angle sensor or the steering angular velocity we estimated from the voltage between the terminals of the motor and the motor current with predetermined values respectively set thereto,

wherein the steering angle sensor is decided to be abnormal when the following conditions are met:

when the difference between the steering angular velocity ωa and the steering angular velocity ωm exceeds the corresponding predetermined value and
when the difference between the steering angular velocity ωa and steering angular velocity ωe exceeds the corresponding predetermined value.

According to the present invention, when both two differences ($|\theta a - \theta r|$, $|\theta a - \theta e|$) between the absolute steering angle value θa obtained from the steering angle sensor and the relative steering angle value θr estimated from the rotating angle sensor of the motor, and the estimated steering angle value θe estimated from the induced voltage of the motor respectively exceed the predetermined values (threshold values), the steering angle sensor is determined to be failed. Therefore, when the rotating angle sensor of the motor is failed, the difference between the absolute steering angle value θa obtained from the steering angle sensor and the relative steering angle value θr estimated from the rotating angle sensor of the motor is abnormal. However, the compared result of the absolute steering angle value θa obtained from the steering angle sensor and the estimated steering angle value θe estimated from the induced voltage of the motor is normal. Thus, such a situation is effectively avoided that although the steering angle sensor is normal, the steering angle sensor is erroneously decided to be abnormal.

Further, according to the second aspect of the invention, since the steering angles (absolute, relative, estimated) are compared on the basis of variations from the initial values of the steering angles (absolute, relative, estimated) respectively, a failure deciding process can be started at an arbitrary time.

According to the third aspect of the invention, since the relative steering angle and the estimated steering angle are corrected by using the estimated value $\theta_0$ of the true steering angle estimated in accordance with the wheel rotating speed obtained by the wheel rotating speed sensor, even when the steering angle sensor has an offset error, an abnormality thereof can be detected.

Further, according to the fourth aspect of the invention, a neutral angle is estimated and the relative steering angle $\theta r$ is corrected by using the initial value $\theta r_0$ of the relative steering angle $\theta r$ at the time when the estimation of the neutral angle is completed. The estimated steering angle $\theta e$ is corrected by using the initial value $\theta e_0$ of the estimated steering angle $\theta e$ at the substantially same time. Thus, even when the steering angle sensor has an offset error, an abnormality thereof can be detected.

Still further, when the two differences ($|\omega a - \omega m|$, $|\omega a - l|$) between the steering angular velocity $\omega a$ obtained from the steering angle sensor and the steering angular velocity $\omega m$ estimated from the rotating angle sensor of the motor, and the steering angular velocity $\omega e$ estimated from the induced voltage of the motor respectively exceed threshold values, the steering angle sensor is determined to be failed. Thus, the same effects as described above can be obtained.

BRIEF DESCRIPTION OF THE DRAWINGS

Fig. 1 is a perspective view showing an external appearance of an electric power steering device according to the present invention;
Fig. 2 is a block diagram showing a specific structure of a microcomputer of Fig. 1;
Fig. 3 is a diagram for explaining a deviation between a relative steering angle $\theta r$ or an estimated steering angle value $\theta e$ and a true steering angle value;
Fig. 4 is an example of a flowchart showing the flow of a failure deciding process of a steering angle sensor in a first embodiment;
Fig. 5 is a control block diagram of a central processing unit of the first embodiment;
Fig. 6 is an example of a flowchart showing the flow of a failure deciding process of a steering angle sensor in a second embodiment;
Fig. 7 is a control block diagram of a central processing unit of the second embodiment;
Fig. 8 is a diagram for explaining the meaning of the estimation of a true steering angle;
Fig. 9 is an example of a flowchart showing the flow of a failure deciding process of a steering angle sensor in a third embodiment;
Fig. 10 is a control block diagram of a central processing unit of the third embodiment;
Fig. 11 is an example of a flowchart showing the flow of a failure deciding process of a steering angle sensor in a fourth embodiment; and
Fig. 12 is a control block diagram of a central processing unit of the fourth embodiment.

DETAILED DESCRIPTION OF EXEMPLARY EMBODIMENTS OF THE INVENTION EMBODIMENTS

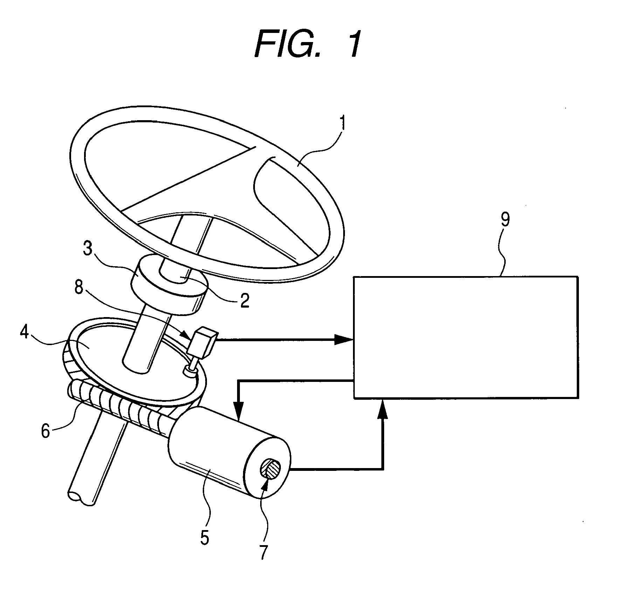

Fig. 1 is a perspective view showing an external appearance of an electric power steering device according to the present invention. A torque sensor 3 is attached to a steering shaft 2 as a steering axis connected to a steering wheel 1. Further, to the steering shaft 2, a speed reducer 4 is attached. A gear 6 attached to a rotating shaft of an electric motor (hereinafter a motor) 5 is engaged with the speed reducer 4. Further, on the rotating shaft of the motor 5, a motor rotating angle sensor 7 for detecting the rotating angle of the motor 5 is disposed. As the motor rotating angle sensor, a hole sensor or a resolver may be employed. Still further, a steering angle sensor 8 serves to detect the steering angle $\theta$ of the steering shaft 2. Output signals of the motor rotating angle sensor 7 and the steering angle sensor 8 are inputted to a controller 9. The controller 9 controls a driving current of the motor 5 by a steering assist command value calculated on the basis of a steering torque detected by the torque sensor 3 and a vehicle speed detected by a vehicle speed sensor that is not shown in the drawing to apply a steering assist force.

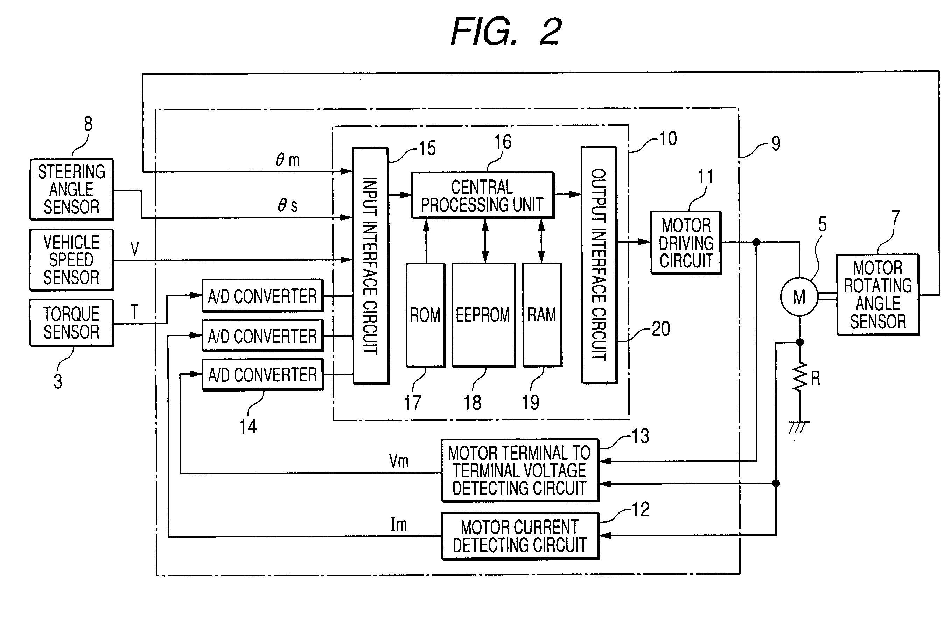

As shown in Fig. 2, the controller 9 includes a microcomputer 10 for performing a control process of the motor 5, a motor driving circuit 11 for controlling the driving current supplied to the motor 5 in accordance with a motor current command value outputted from the microcomputer 10, a motor current detecting circuit 12 for detecting the driving current Im supplied to the motor 5 and a motor voltage between terminals detecting circuit 13 for detecting motor voltage between terminals Vm supplied to the motor 5 from the motor driving circuit 11.

Then, a steering torque T detected by the torque sensor 3, a motor current detecting value Im detected by the motor current detecting circuit 12 and a motor voltage between terminals Vm detected by the motor voltage between terminals detecting circuit 13 are respectively converted into digital values in A/D converters 14 and thus obtained digital values are inputted to the microcomputer 10.

The microcomputer 10 includes an input interface circuit 15, a central processing unit 16, a ROM (read only memory) 17, an electrically erasable EEPROM 18, a RAM (random access memory) 19 and an output interface circuit 20. To the input interface circuit 15, a steering angle signal θs from the steering angle sensor 8, the steering torque T, a vehicle speed V, the motor current detecting value Im, the motor voltage between terminals Vm and a motor rotating angle θm are inputted. The central processing unit 16 drives and controls the motor 5 in accordance with the steering torque T, the steering angle signal θs, the motor current detecting value Im and the motor voltage between terminals Vm to perform a steering assist control process for generating the steering assist force corresponding to the steering torque. The ROM 17 stores a steering assist control processing program or the like performed in the central processing unit 16. The electrically erasable EEPROM 18 works a nonvolatile storing part for storing a steering angle initial value. The RAM 19 temporarily stores detected data such as the steering torque T, the motor current detecting value Im and a motor angular velocity ω, data or processed results required in the course of the steering assist control process performed in the central processing unit 16. To the output interface circuit 20, the motor driving circuit 11 is connected.

In the electric power steering according to the present invention, when both two differences ($|\theta a - \theta r|$, $|\theta a - \theta e|$) respectively exceed predetermined values (threshold values), the steering angle sensor is determined to be failed. Wherein θa is an absolute steering angle value calculated from the signal θs obtained from the steering angle sensor 8, θr is a relative steering angle value estimated from the rotating angle sensor of the motor, and θe is an estimated steering angle value estimated from the induced voltage of the motor.

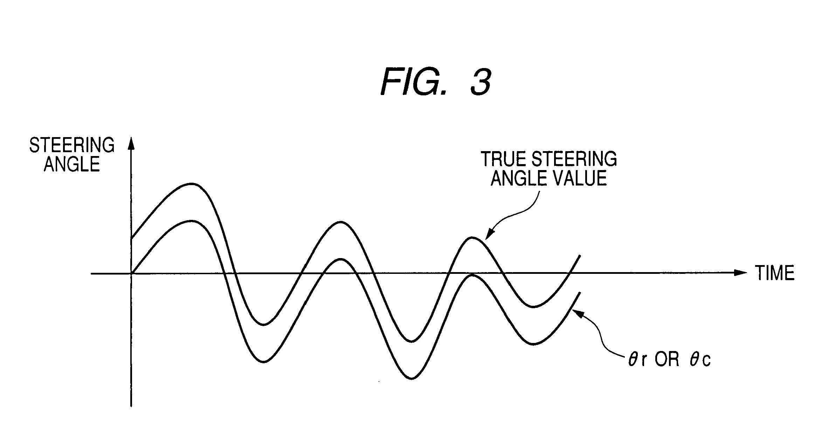

Since change amount of angle with respect to time change of the relative steering angle value θr or the estimated steering angle value θe corresponds to that of a true steering angle, however, the initial value of them does not correspond to that of the true steering angle value, the relative steering angle value or the estimated steering angle value deviates from the true steering angle value as shown in Fig. 3. That is, when there is no error, the true steering angle value is equal to the absolute steering angle value θa.

Therefore, to compare the absolute steering angle θa with θr (or θe), this deviation needs to be compensated for by any point. The present invention is sorted into four embodiments depending on a method for compensation. Now, each embodiment will be described below.

[First Embodiment]

In a first embodiment, changes from values at a certain time (initial values) are respectively obtained for the absolute steering angle value θa, the relative steering angle value θr and the estimated steering angle value θe, and the changes are mutually compared to compensate for the above-described deviation.

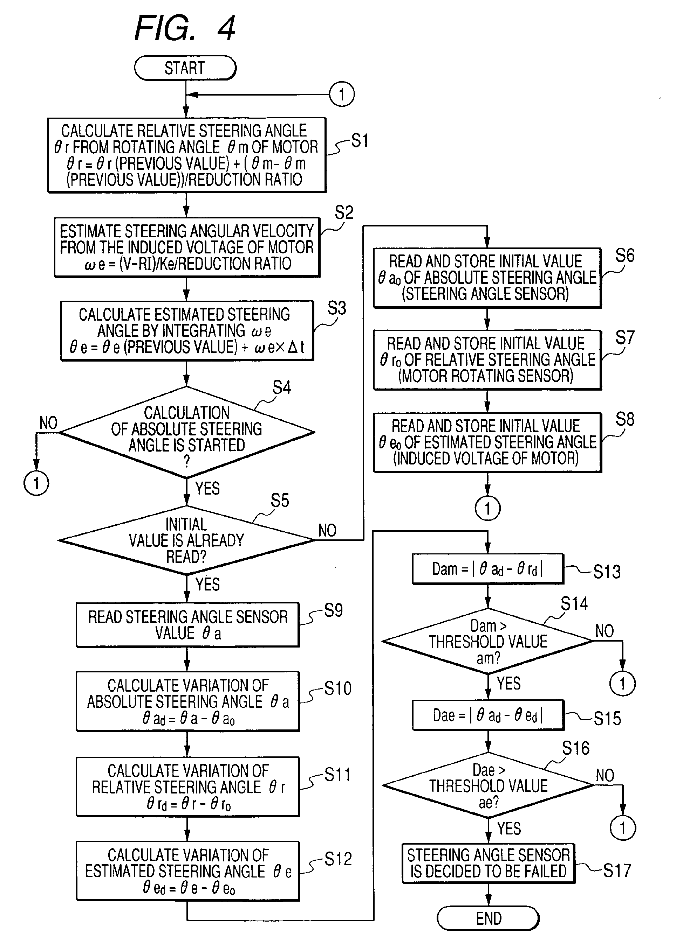

Fig. 4 is an example of a flowchart showing the flow of a failure deciding process of the steering angle sensor in the first embodiment. An explanation will be given below by referring to Fig. 4.

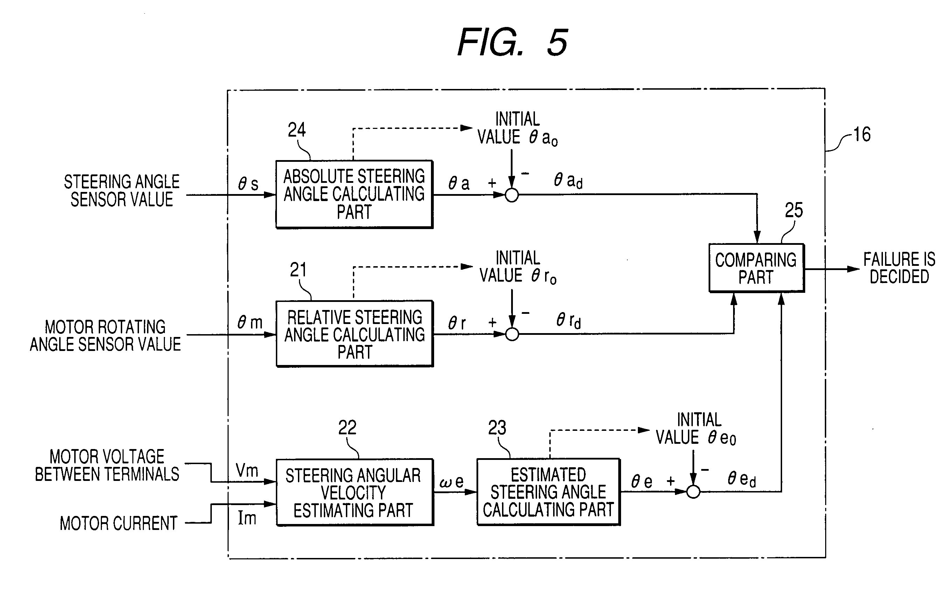

When an ignition key is turned on, the motor rotating angle θm from the motor rotating angle sensor is read by the microcomputer 10 and the relative steering angle θr is calculated (step S1) in a relative steering angle calculating part 21 (see Fig. 5) of the central processing unit 16. θr is calculated by a below-described formula (1).

θr = θr (previous value) + (θm- θm (previous value))/reduction

ratio ……..(1)

Then, a steering angular velocity ωe is estimated from the induced voltage of the motor in a steering angular velocity estimating part 22 (step S2). That is, the steering angular velocity we is estimated by a below-described formula (2).

ωe = (Vm - R x Im)/Ke/reduction ratio …..(2)

Here, Vm indicates the motor voltage between terminals, R indicates a motor resistance between terminals, Im indicates the motor current and Ke indicates a constant of a counter electromotive force.

Further, this ωe is integrated in an estimated steering angle calculating part 23 to calculate the estimated steering angle θe (step S3). That is, ωe is calculated by a below-described formula (3).

$$\theta e = \theta e \text{ (previous value)} + \omega e \times \Delta t\ldots\ldots. \quad (3)$$

The above-described steps S1 to S3 are repeatedly calculated until the absolute steering angle $\theta a$ is calculated from the steering angle sensor value $\theta s$ in an absolute steering angle calculating part 24, and the value is updated.

When the calculation of the absolute steering angle $\theta a$ is started (step S4), the values of $\theta a$, $\theta r$ and $\theta e$ at that timing are respectively read and stored in the RAM 19 as initial values $\theta a_0$, $\theta r_0$ and $\theta e_0$ (steps S6 to S8).

Then, the procedure returns to the step S1 to calculate $\theta r$ and $\theta e$ of a next time (the steps S1 to S3). Since the initial values are already read, the procedure jumps to step S9 to calculate the absolute steering angle $\theta a$ of a next time, and calculate a variation $\theta a_d$ (= $\theta a - \theta a_0$) from the initial value $\theta a_0$ (step S10). Similarly, a variation $\theta r_d$ (= $\theta r - \theta r_0$) of the relative steering angle $\theta r$ is calculated in the same way (step S11). Further, a variation $\theta e_d$ (= $\theta e - \theta e_0$) of the estimated steering angle $\theta e$ is also calculated (step S12).

Then, a difference Dam between $\theta a_d$ and $\theta r_d$ is calculated in a comparing part 25 (step S13). When the Dam is not higher than the predetermined value (threshold value), the steering angle sensor is decided to be normal and the procedure returns to the step S1 to calculate $\theta r$ and $\theta e$ of a next time (the steps S1 to S3). The threshold values are previously stored in the ROM 17.

When the Dam exceeds the threshold value in step S14, a difference Dae between $\theta a_d$ and $\theta e_d$ is further calculated (step S15). When the Dae is not higher than the threshold value, the steering angle sensor is decided to be normal (consequently, the motor rotating angle sensor is abnormal), and the procedure returns to the step S1 to calculate to calculate $\theta r$ and $\theta e$ of a next time (the steps S1 to S3).

When the Dae exceeds the threshold value in step S16, the steering angle sensor is decided to be abnormal (the steering angle sensor is decided to be failed) (step S17) to finish processes.

[Second Embodiment]

In a second embodiment, an absolute steering angle value $\theta a$, a relative steering angle value $\theta r$ and an estimated steering angle value $\theta e$ are respectively converted into steering angular velocities and the steering angular velocities are mutually compared to eliminate an influence by the above-described deviation.

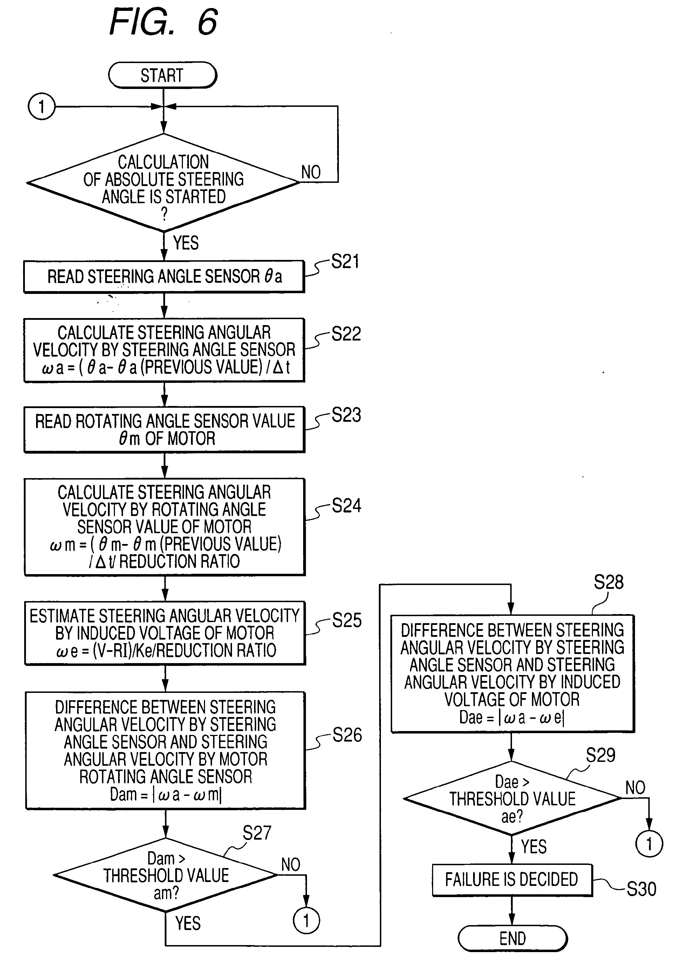

Fig. 6 is an example of a flowchart showing the flow of a failure deciding process of a steering angle sensor in the second embodiment. An explanation will be given by referring to Fig. 6.

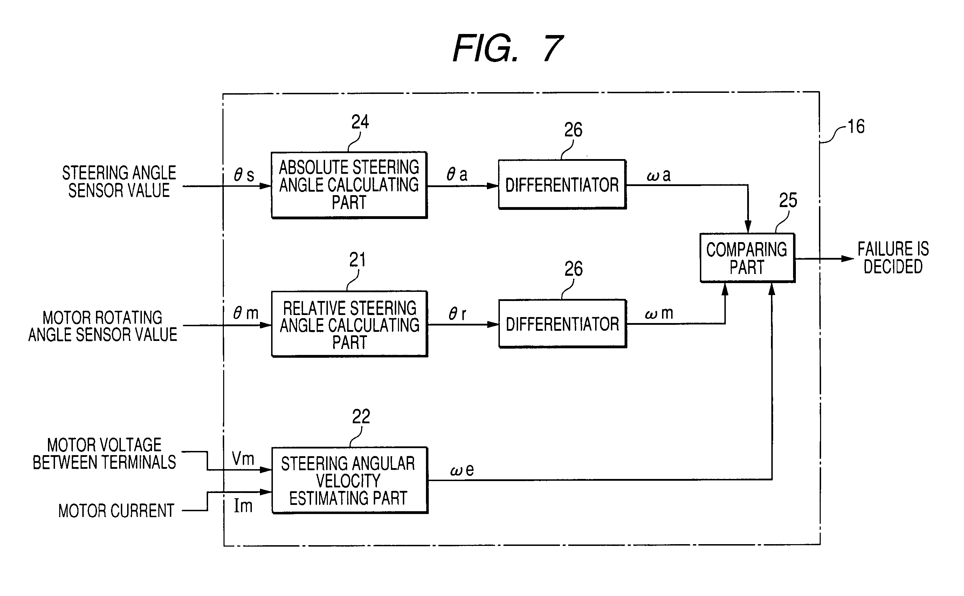

When an ignition key is turned on, the absolute steering angle $\theta a$ is calculated in an absolute steering angle calculating part 24 (see Fig. 7) on the basis of $\theta s$ read from the steering angle sensor at a timing of starting to calculate the absolute steering angle (step S21). The absolute steering angle $\theta a$ is inputted to a differentiator 26 (Fig. 7) and differentiated to calculate the steering angular velocity $\omega a$ by the steering angle sensor (step S22). Then, the relative steering angle $\theta r$ is calculated in a relative steering angle calculating part 21 from a rotating angle sensor value $\theta m$ read by a motor rotating angle sensor at the same timing (step S23). The relative steering angle $\theta r$ is inputted to a differentiator 26 (Fig. 7) and differentiated to calculate the steering angular velocity $\omega m$ by a motor rotating angle sensor value (step S24). Further, the steering angular velocity $\omega e$ is estimated in a steering angular velocity estimating part 22 from the induced voltage of a motor (step S25). That is, the steering angular velocity we is estimated by the above-described formula (2).

Then, a difference Dam between $\omega a$ and $\omega m$ is calculated in a comparing part 25 (step S26). When the Dam is not higher than a threshold value, the steering angle sensor is decided to be normal and the procedure returns to the step S21 to calculate $\omega a$, $\omega m$ and $\omega e$ of a next time (the steps S22 to S25).

When the Dam exceeds the threshold value in step S27, a difference Dae between $\omega a$ and $\omega e$ is further calculated (step S28). When the Dae is not higher than a threshold value, the steering angle sensor is decided to be normal (consequently, the motor rotating angle sensor is abnormal), and the procedure returns to the step S21 to calculate $\omega a$, $\omega m$ and $\omega e$ of a next time (the steps S22 to S25).

When the Dae exceeds the threshold value in step S29, the steering angle sensor is decided to be abnormal (the steering angle sensor is decided to be failed) (step S30) to finish processes.

[Third Embodiment]

In a third embodiment, a true steering angle is estimated at least once and the deviations of a relative steering angle value $\theta r$ and an estimated steering angle value $\theta e$ are compensated for by the estimated value of the steering angle (this is defined to be $\theta_0$).

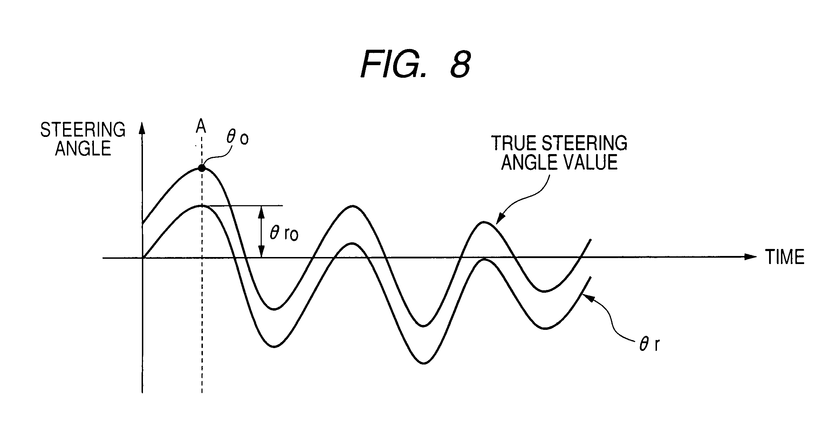

This operation will be described in detail by referring to Fig. 8. It is assumed that the true steering angle can be estimated at time A. The estimation carried out at the time A is made by using a wheel rotating speed obtained in a wheel rotating speed sensor that is not shown in the drawing and can adopt a method disclosed in Japanese Patent Unexamined Publication JP-A-2005-098827. According to this method, when an error is removed, the true steering angle value is estimated. A relation between $\theta r_0$ and the estimated value of the steering angle $\theta_0$ of the steering angle at this time is shown in Fig. 8.

Accordingly, the difference between the relative steering angle value $\theta r$ and the true steering angle value is expressed by $(\theta_0 - \theta r_0)$, and then, the true steering angle value can be estimated by $\theta r + (\theta_0 - \theta r_0)$. There is a method that the steering angle initial value $\theta a_0$ in the first embodiment may be considered to be replaced by the estimated value of the steering angle $\theta_0$ and the estimated value of the steering angle $\theta_0$ is subtracted from an absolute steering angle value $\theta a$, however, the same calculation is finally carried out. Namely, the first embodiment can be modified as follows.

$$\theta a_d - \theta r_d = (\ \theta a - \theta a_0\ ) - (\theta r - \theta r_0\ ) = \theta a - (\theta r + \theta a_0 - \theta r_0\ ).$$

Accordingly, when $\theta a_0$ is replaced by $\theta_0$, it can be understood that $(\theta a_d - \theta r_d)$ in the first embodiment is the same as $(\theta a - \theta r_d)$ in the third embodiment.

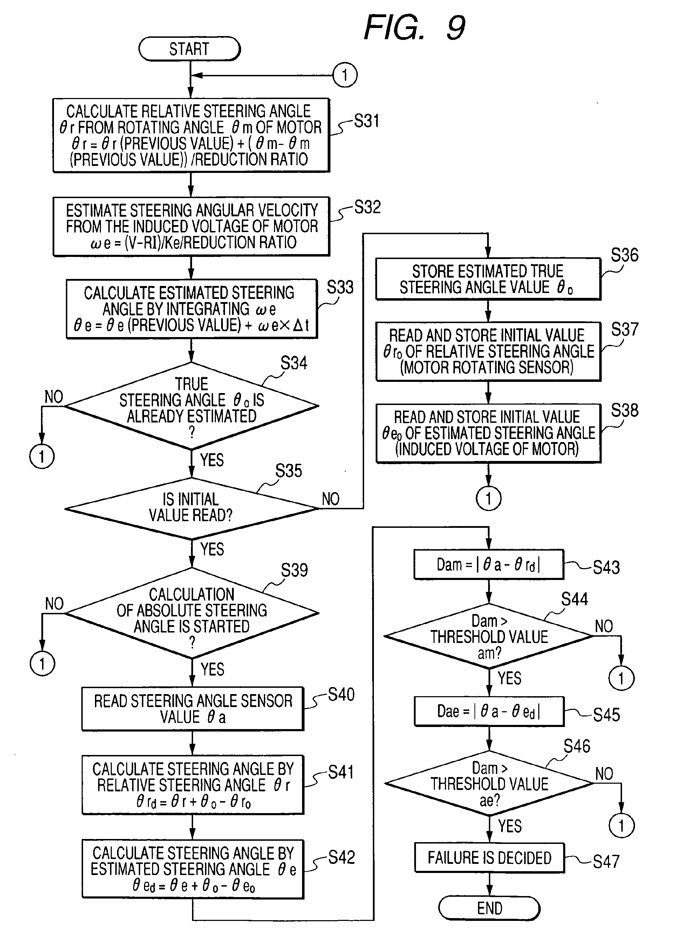

Fig. 9 is an example of a flowchart showing the flow of a failure deciding process of a steering angle sensor in a third embodiment. An explanation will be given below by referring to Fig. 9.

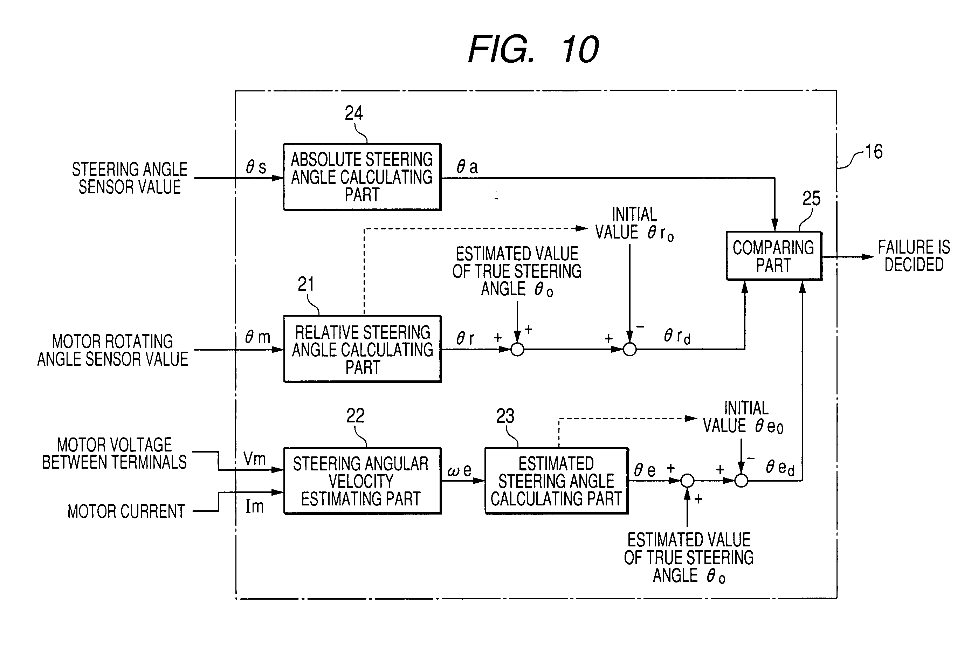

When an ignition key is turned on, a motor rotating angle $\theta m$ from a motor rotating angle sensor is read by a microcomputer 10 and a relative steering angle $\theta r$ is calculated (step S31) in a relative steering angle calculating part 21 (see Fig. 10) of a central processing unit 16. $\theta r$ is calculated by the above-described formula (1).

Then, a steering angular velocity $\omega e$ is estimated from the induced voltage of a motor in a steering angular velocity estimating part 22 (step S32) . That is, the steering angular velocity $\omega e$ is estimated by the above-described formula (2).

Further, this $\omega e$ is integrated in an estimated steering angle calculating part 23 to calculate an estimated steering angle $\theta e$ (step S33). That is, $\omega e$ is calculated by the above-described formula (3).

The above-described steps S31 to S33 are repeatedly calculated until the estimation of the true steering angle is completed, and the value is updated.

When the estimation of the true steering angle is completed (step S34), the true steering angle value $\theta_0$ and the values of $\theta r$ and $\theta e$ at that timing are respectively read and stored in a RAM 19 as initial values , $\theta r_0$ and $\theta e_0$ (steps S36 to S38).

Then, the procedure returns to the step S31 to calculate $\theta r$ and $\theta e$ of a next time (the steps S31 to S33). Since the initial values are already read, the procedure jumps to step S39 to read and calculate the absolute steering angle $\theta a$ of a next time (step S40). Then, a true steering angle $\theta r_d$ $(= \theta r + \theta_0 - \theta r_0)$ estimated on the basis of the relative steering angle $\theta r$ is calculated (step S41). Further, a true steering angle $\theta e_d$ $(= \theta e + \theta_0 - \theta e_0)$ estimated on the basis of the estimated steering angle $\theta e$ is also calculated (step S42).

Then, a difference Dam between $\theta a$ and $\theta r_d$ is calculated in a comparing part 25 (step S43). When the Dam is not higher than a threshold value, a steering angle sensor is decided to be normal and the procedure returns to the step S31 to calculate $\theta r$ and $\theta e$ of a next time (the steps S31 to S33).

When the Dam exceeds the threshold value in step S44, a difference Dae between $\theta a$ and $\theta e_d$ is further calculated (step S45) . When the Dae is not higher than a threshold value, the steering angle sensor is decided to be normal (consequently, the motor rotating angle sensor is abnormal), and the procedure returns to the step S31 to calculate to calculate $\theta r$ and $\theta e$ of a next time (the steps S31 to S33).

When the Dae exceeds the threshold value in step S46, the steering angle sensor is decided to be abnormal (the steering angle sensor is decided to be failed) (step S47) to finish processes.

When there is an abnormality that the steering angle sensor has an offset error, the offset error cannot be detected in the first and second embodiments. However, in the third embodiment, the true steering angle is estimated and the true steering angle is compared with a steering angle actually detected from the steering angle sensor so that the offset error can be detected.

[Fourth Embodiment]

In a fourth embodiment, a neutral angle of an absolute steering angle is estimated and a relative steering angle $\theta r$ and an estimated steering angle $\theta e$ at that time are corrected to be zero to compensate for a deviation from a true steering angle value.

In estimating the neutral angle, the neutral angle $\theta k$ is estimated in a neutral angle estimating unit 27 in accordance with a steering torque T from a torque sensor, a vehicle speed V from a vehicle speed sensor and a steering angular velocity $\theta m$. The neutral angle estimating unit 27 includes a straight advancement deciding unit 28 and a neutral angle correcting unit and a technique disclosed in Japanese Patent Application JP-2005-165235 (which is not laid open prior to priority date of the present application) may be employed.

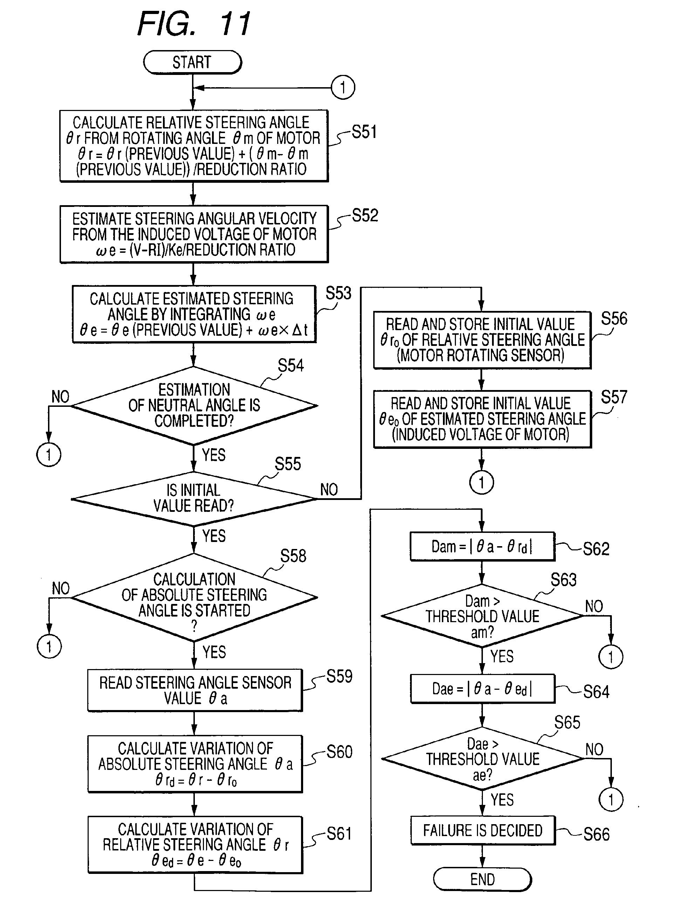

Fig. 11 is an example of a flowchart showing the flow of a failure deciding process of a steering angle sensor in a fourth embodiment. An explanation will be given below by referring to Fig. 11.

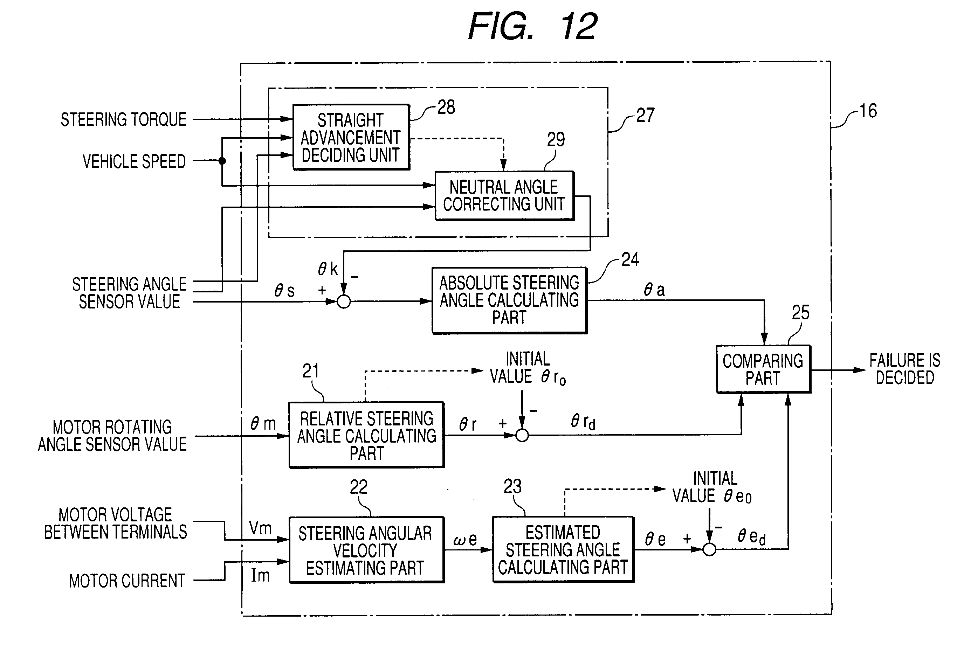

When an ignition key is turned on, a motor rotating angle $\theta m$ from a motor rotating angle sensor is read by a microcomputer 10 and a relative steering angle $\theta r$ is calculated (step S51) in a relative steering angle calculating part 21 (see Fig. 12) of a central processing unit 16. $\theta r$ is calculated by the above-described formula (1).

Then, a steering angular velocity $we$ is estimated from the induced voltage of a motor in a steering angular velocity estimating part 22 (step S52). That is, the steering angular velocity $\omega e$ is estimated by the above-described formula (2). Further, this $we$ is integrated in an estimated steering angle calculating part 23 to calculate an estimated steering angle $\theta e$ (step S53). That is, $we$ is calculated by the above-described formula (3).

The above-described steps S51 to S53 are repeatedly calculated until the estimation of the neutral angle is completed, and the value is updated.

When the estimation of the neutral angle is completed (step S54), the values of $\theta r$ and $\theta e$ at that timing are respectively read and stored in a RAM 19 as initial values $\theta r_0$ and $\theta e_0$ (steps S56 and S57).

Then, the procedure returns to the step S51 to calculate $\theta r$ and $\theta e$ of a next time (the steps S51 to S53). Since the initial values are already read, the procedure shifts to step S58 to read and calculate an absolute steering angle $\theta a$ of a next time (a correction by the estimated neutral angle $\theta k$ is carried out) (step S59). Then, a relative steering angle $\theta r_d$ (= $\theta r$ - $\theta r_0$) corrected by the neutral angle is calculated (step S60) . Further, an estimated steering angle $\theta e_d$ (= $\theta e$ - $\theta e_0$) corrected by the neutral angle is also calculated (step S61).

Then, a difference Dam between $\theta a$ and $\theta r_d$ is calculated in a comparing part 25 (step S62) . When the Dam is not higher than a threshold value, a steering angle sensor is decided to be normal and the procedure returns to the step S51 to calculate $\theta r$ and $\theta e$ of a next time (the steps S51 to S53).

When the Dam exceeds the threshold value in step S63, a difference Dae between $\theta a$ and $\theta e_d$ is further calculated (step S64). When the Dae is not higher than a threshold value, the steering angle sensor is decided to be normal (consequently, the motor rotating angle sensor is abnormal), and the procedure returns to the step S51 to calculate $\theta r$ and $\theta e$ of a next time (the steps S51 to S53).

When the Dae exceeds the threshold value in step S65, the steering angle sensor is decided to be abnormal (the steering angle sensor is decided to be failed) (step S66) to finish processes.

When there is an abnormality that the steering angle sensor has an offset error, the offset error cannot be detected in the first and second embodiments. However, in the fourth embodiment, the neutral angle is estimated and the neutral angle is compared with a steering angle actually detected from the steering angle sensor so that the offset error can be detected.

**Claims**

1.  An electric power steering device, comprising:

    a steering wheel to which steering torque is input;
    a steering shaft being integral with the steering wheel;
    a torque sensor that detects steering torque of the steering wheel;
    a motor that applies assist load to the steering shaft; and
    a controller that drives the motor in accordance with magnitude of the steering torque,

    wherein the controller comprises:

    an absolute steering angle calculating part that calculates an absolute steering angle $\theta a$ in accordance with a signal from a steering angle sensor;
    a relative steering angle calculating part that calculates a relative steering angle $\theta r$ in accordance with a motor rotating angle sensor value from a motor rotating angle sensor of the motor;
    a steering angular velocity estimating part that estimates a steering angular velocity from voltage between terminals of the motor and a motor current;
    an estimated steering angle calculating part that calculates an estimated steering angle $\theta e$ by integrating the steering angular velocity; and
    a comparing part that compares the difference between the absolute steering angle $\theta a$ and the relative steering angle $\theta r$ or the estimated steering angle $\theta e$ with predetermined values respectively set thereto,

    wherein the steering angle sensor is decidedtobe abnormal, when following conditions are met:

the difference between the absolute steering angle $\theta a$ and the relative steering angle $\theta r$ exceeds the corresponding predetermined value; and

the difference between the absolute steering angle $\theta a$ and the estimated steering angle $\theta e$ exceeds the corresponding predetermined value.

2. The electric power steering device according to claim 1, wherein

the absolute steering angle $\theta a$ is corrected by using an initial value $\theta a_0$ of the absolute steering angle $\theta a$ at a certain time,

the relative steering angle $\theta r$ is corrected by using an initial value $\theta r_0$ of the relative steering angle $\theta r$ at the substantially same time, and

the estimated steering angle $\theta e$ is corrected by using an initial value $\theta e_0$ of the estimated steering angle $\theta e$ at the substantially same time.

3. The electric power steering device according to claim 1, further comprising a wheel rotating speed sensor,

wherein an estimated value $\theta_0$ of true steering angle is estimated in accordance with a wheel rotating speed obtained by the wheel rotating speed sensor at a certain time,

the relative steering angle $\theta r$ is corrected by using the difference $(\theta_0 - \theta r_0)$ between the estimated value $\theta_0$ at the certain time and the initial value $\theta r_0$ of the relative steering angle $\theta r$ at the substantially same time and

the estimated steering angle $\theta e$ is corrected by using the difference $(\theta_0 - \theta_0)$ between the estimated value $\theta_0$ of the true steering angle at the certain time and the initial value $\theta e_0$ of the estimated steering angle $\theta e$ at the substantially same time.

4. The electric power steering device according to claim 1, further comprising a neutral angle estimating unit,

wherein the relative steering angle $\theta r$ is corrected by using the initial value $\theta r_0$ of the relative steering angle $\theta r$ at a time when the estimation of a neutral angle of the absolute steering angle by the neutral angle estimating unit is completed and

the estimated steering angle $\theta e$ is corrected by using the initial value $\theta e_0$ of the estimated steering angle $\theta e$ at the substantially same time.

5. An electric power steering device comprising:

   a steering wheel to which steering torque is input;
   a steering shaft being integral with the steering wheel;
   a torque sensor that detects steering torque of the steering wheel;
   a motor that applies assist load to the steering shaft; and
   a controller that drives the motor in accordance with magnitude of the steering torque,

   wherein the controller comprises:

   a first steering angular velocity calculating art that calculates a steering angular velocity $\omega a$ in accordance with a signal from a steering angle sensor;
   a second steering angular velocity calculating part that calculates a steering angular velocity $wm$ in accordance with a motor rotating angle sensor value from a motor rotating angle sensor of the motor;
   a steering angular velocity estimating part that estimates a steering angular velocity $\omega e$ from voltage between terminals of the motor and a motor current; and
   a comparing part that compares difference between the steering angular velocity $\omega a$ by the steering angle sensor and the steering angular velocity $\omega m$ by the motor rotating angle sensor or the steering angular velocity $\omega e$ estimated from the voltage between the terminals of the motor and the motor current with predetermined values respectively set thereto,

   wherein the steering angle sensor is decided to be abnormal when the following conditions are met:

   when the difference between the steering angular velocity $\omega a$ and the steering angular velocity $\omega m$ exceeds the corresponding predetermined value and
   when the difference between the steering angular velocity $\omega a$ and steering angular velocity $\omega e$ exceeds the corresponding predetermined value.

# FIG. 1

FIG. 2

EP 1 839 995 A2

# FIG. 3

STEERING ANGLE

TRUE STEERING ANGLE VALUE

TIME

$\theta$r OR $\theta$c

EP 1 839 995 A2

## FIG. 4

START → (1)

**S1** CALCULATE RELATIVE STEERING ANGLE $\theta r$ FROM ROTATING ANGLE $\theta m$ OF MOTOR
$\theta r = \theta r$ (PREVIOUS VALUE) + ($\theta m - \theta m$ (PREVIOUS VALUE))/REDUCTION RATIO

**S2** ESTIMATE STEERING ANGULAR VELOCITY FROM THE INDUCED VOLTAGE OF MOTOR
$\omega e = (V-RI)/Ke$/REDUCTION RATIO

**S3** CALCULATE ESTIMATED STEERING ANGLE BY INTEGRATING $\omega e$
$\theta e = \theta e$ (PREVIOUS VALUE) + $\omega e \times \Delta t$

**S4** CALCULATION OF ABSOLUTE STEERING ANGLE IS STARTED ?
— NO → (1)
— YES

**S5** INITIAL VALUE IS ALREADY READ?
— NO →
— YES

**S6** READ AND STORE INITIAL VALUE $\theta a_0$ OF ABSOLUTE STEERING ANGLE (STEERING ANGLE SENSOR)

**S7** READ AND STORE INITIAL VALUE $\theta r_0$ OF RELATIVE STEERING ANGLE (MOTOR ROTATING SENSOR)

**S8** READ AND STORE INITIAL VALUE $\theta e_0$ OF ESTIMATED STEERING ANGLE (INDUCED VOLTAGE OF MOTOR)
→ (1)

**S9** READ STEERING ANGLE SENSOR VALUE $\theta a$

**S10** CALCULATE VARIATION OF ABSOLUTE STEERING ANGLE $\theta a$
$\theta a_d = \theta a - \theta a_0$

**S11** CALCULATE VARIATION OF RELATIVE STEERING ANGLE $\theta r$
$\theta r_d = \theta r - \theta r_0$

**S12** CALCULATE VARIATION OF ESTIMATED STEERING ANGLE $\theta e$
$\theta e_d = \theta e - \theta e_0$

**S13** $Dam = |\theta a_d - \theta r_d|$

**S14** $Dam >$ THRESHOLD VALUE am?
— NO → (1)
— YES

**S15** $Dae = |\theta a_d - \theta e_d|$

**S16** $Dae >$ THRESHOLD VALUE ae?
— NO → (1)
— YES

**S17** STEERING ANGLE SENSOR IS DECIDED TO BE FAILED

END

## FIG. 5

EP 1 839 995 A2

## FIG. 6

START

① → CALCULATION OF ABSOLUTE STEERING ANGLE IS STARTED ? — NO

YES

READ STEERING ANGLE SENSOR $\theta$a — S21

CALCULATE STEERING ANGULAR VELOCITY BY STEERING ANGLE SENSOR $\omega$a = ( $\theta$a- $\theta$a (PREVIOUS VALUE) / $\Delta$t — S22

READ ROTATING ANGLE SENSOR VALUE $\theta$m OF MOTOR — S23

CALCULATE STEERING ANGULAR VELOCITY BY ROTATING ANGLE SENSOR VALUE OF MOTOR $\omega$m = ( $\theta$m- $\theta$m (PREVIOUS VALUE) / $\Delta$t/ REDUCTION RATIO — S24

ESTIMATE STEERING ANGULAR VELOCITY BY INDUCED VOLTAGE OF MOTOR $\omega$e = (V-RI)/Ke/REDUCTION RATIO — S25

DIFFERENCE BETWEEN STEERING ANGULAR VELOCITY BY STEERING ANGLE SENSOR AND STEERING ANGULAR VELOCITY BY MOTOR ROTATING ANGLE SENSOR Dam = | $\omega$a - $\omega$m| — S26

Dam > THRESHOLD VALUE am? — S27 — NO → ①

YES

DIFFERENCE BETWEEN STEERING ANGULAR VELOCITY BY STEERING ANGLE SENSOR AND STEERING ANGULAR VELOCITY BY INDUCED VOLTAGE OF MOTOR Dae = | $\omega$a - $\omega$e| — S28

Dae > THRESHOLD VALUE ae? — S29 — NO → ①

YES

FAILURE IS DECIDED — S30

END

## FIG. 7

STEERING ANGLE SENSOR VALUE —$\theta s$→ **ABSOLUTE STEERING ANGLE CALCULATING PART** (24) —$\theta a$→ **DIFFERENTIATOR** (26) —$\omega a$→ **COMPARING PART** (25) → FAILURE IS DECIDED

MOTOR ROTATING ANGLE SENSOR VALUE —$\theta m$→ **RELATIVE STEERING ANGLE CALCULATING PART** (21) —$\theta r$→ **DIFFERENTIATOR** (26) —$\omega m$→

MOTOR VOLTAGE BETWEEN TERMINALS —$Vm$→ / MOTOR CURRENT —$Im$→ **STEERING ANGULAR VELOCITY ESTIMATING PART** (22) —$\omega e$→

16

EP 1 839 995 A2

FIG. 8

STEERING
ANGLE

A

$\theta$ o

TRUE STEERING
ANGLE VALUE

$\theta$ ro

TIME

$\theta$ r

EP 1 839 995 A2

## FIG. 9

```
                    START
                                            ──①
                       │
                       ▼
     ┌──────────────────────────────────────┐
     │ CALCULATE RELATIVE STEERING ANGLE     │
     │ θr FROM ROTATING ANGLE θm OF MOTOR    │──S31
     │ θr = θr (PREVIOUS VALUE) + ( θm- θm   │
     │ (PREVIOUS VALUE)) /REDUCTION RATIO    │
     └──────────────────────────────────────┘
                       │
                       ▼
     ┌──────────────────────────────────────┐
     │ ESTIMATE STEERING ANGULAR VELOCITY    │──S32
     │ FROM THE INDUCED VOLTAGE OF MOTOR     │
     │ ωe = (V−RI)/Ke/REDUCTION RATIO        │
     └──────────────────────────────────────┘
                       │
                       ▼
     ┌──────────────────────────────────────┐
     │ CALCULATE ESTIMATED STEERING          │──S33
     │ ANGLE BY INTEGRATING ωe               │
     │ θe = θe (PREVIOUS VALUE) + ωe×Δt       │
     └──────────────────────────────────────┘
```

S31: CALCULATE RELATIVE STEERING ANGLE $\theta r$ FROM ROTATING ANGLE $\theta m$ OF MOTOR
$\theta r = \theta r$ (PREVIOUS VALUE) + ($\theta m - \theta m$ (PREVIOUS VALUE)) /REDUCTION RATIO

S32: ESTIMATE STEERING ANGULAR VELOCITY FROM THE INDUCED VOLTAGE OF MOTOR
$\omega e = (V - RI)/Ke/$REDUCTION RATIO

S33: CALCULATE ESTIMATED STEERING ANGLE BY INTEGRATING $\omega e$
$\theta e = \theta e$ (PREVIOUS VALUE) + $\omega e \times \Delta t$

S34: TRUE STEERING ANGLE $\theta_0$ IS ALREADY ESTIMATED ? — NO → ① / YES ↓

S35: IS INITIAL VALUE READ? — NO → (to S36) / YES ↓

S36: STORE ESTIMATED TRUE STEERING ANGLE VALUE $\theta_0$

S37: READ AND STORE INITIAL VALUE $\theta r_0$ OF RELATIVE STEERING ANGLE (MOTOR ROTATING SENSOR)

S38: READ AND STORE INITIAL VALUE $\theta e_0$ OF ESTIMATED STEERING ANGLE (INDUCED VOLTAGE OF MOTOR) → ①

S39: CALCULATION OF ABSOLUTE STEERING ANGLE IS STARTED ? — NO → ① / YES ↓

S40: READ STEERING ANGLE SENSOR VALUE $\theta a$

S41: CALCULATE STEERING ANGLE BY RELATIVE STEERING ANGLE $\theta r$
$\theta r_d = \theta r + \theta_0 - \theta r_0$

S42: CALCULATE STEERING ANGLE BY ESTIMATED STEERING ANGLE $\theta e$
$\theta e_d = \theta e + \theta_0 - \theta e_0$

S43: Dam = $|\theta a - \theta r_d|$

S44: Dam > THRESHOLD VALUE am? — NO → ① / YES ↓

S45: Dae = $|\theta a - \theta e_d|$

S46: Dam > THRESHOLD VALUE ae? — NO → ① / YES ↓

S47: FAILURE IS DECIDED

END

# FIG. 10

STEERING ANGLE SENSOR VALUE — $\theta s$ → **ABSOLUTE STEERING ANGLE CALCULATING PART** (24) — $\theta a$ →

MOTOR ROTATING ANGLE SENSOR VALUE — $\theta m$ → **RELATIVE STEERING ANGLE CALCULATING PART** (21) — $\theta r$ → + +

INITIAL VALUE $\theta r_0$

ESTIMATED VALUE OF TRUE STEERING ANGLE $\theta_0$

+ − $\theta r_d$

**COMPARING PART** (25) → FAILURE IS DECIDED

16

MOTOR VOLTAGE BETWEEN TERMINALS — Vm → **STEERING ANGULAR VELOCITY ESTIMATING PART** (22) — $\omega e$ → **ESTIMATED STEERING ANGLE CALCULATING PART** (23) — $\theta e$ → + +

MOTOR CURRENT — Im →

INITIAL VALUE $\theta e_0$

+ − $\theta e_d$

ESTIMATED VALUE OF TRUE STEERING ANGLE $\theta_0$

EP 1 839 995 A2

# FIG. 11

START

(1)

**S51** — CALCULATE RELATIVE STEERING ANGLE $\theta r$ FROM ROTATING ANGLE $\theta m$ OF MOTOR
$\theta r = \theta r$ (PREVIOUS VALUE) $+ (\theta m - \theta m$ (PREVIOUS VALUE)) /REDUCTION RATIO

**S52** — ESTIMATE STEERING ANGULAR VELOCITY FROM THE INDUCED VOLTAGE OF MOTOR
$\omega e = (V-RI)/Ke/\text{REDUCTION RATIO}$

**S53** — CALCULATE ESTIMATED STEERING ANGLE BY INTEGRATING $\omega e$
$\theta e = \theta e$ (PREVIOUS VALUE) $+ \omega e \times \Delta t$

**S54** — ESTIMATION OF NEUTRAL ANGLE IS COMPLETED? — NO → (1)

YES

**S55** — IS INITIAL VALUE READ? — NO →

YES

**S56** — READ AND STORE INITIAL VALUE $\theta r_0$ OF RELATIVE STEERING ANGLE (MOTOR ROTATING SENSOR)

**S57** — READ AND STORE INITIAL VALUE $\theta e_0$ OF ESTIMATED STEERING ANGLE (INDUCED VOLTAGE OF MOTOR)

(1)

**S58** — CALCULATION OF ABSOLUTE STEERING ANGLE IS STARTED? — NO → (1)

YES

**S59** — READ STEERING ANGLE SENSOR VALUE $\theta a$

**S60** — CALCULATE VARIATION OF ABSOLUTE STEERING ANGLE $\theta a$
$\theta r_d = \theta r - \theta r_0$

**S61** — CALCULATE VARIATION OF RELATIVE STEERING ANGLE $\theta r$
$\theta e_d = \theta e - \theta e_0$

**S62** — $Dam = |\theta a - \theta r_d|$

**S63** — $Dam >$ THRESHOLD VALUE $am$? — NO → (1)

YES

**S64** — $Dae = |\theta a - \theta e_d|$

**S65** — $Dae >$ THRESHOLD VALUE $ae$? — NO → (1)

YES

**S66** — FAILURE IS DECIDED

END

## FIG. 12

STEERING TORQUE →

VEHICLE SPEED →

STEERING ANGLE SENSOR VALUE →

$\theta s$

STRAIGHT ADVANCEMENT DECIDING UNIT — 28

NEUTRAL ANGLE CORRECTING UNIT — 29

— 27

— 16

$\theta k$  −  +

ABSOLUTE STEERING ANGLE CALCULATING PART — 24

$\theta a$

COMPARING PART — 25 → FAILURE IS DECIDED

MOTOR ROTATING ANGLE SENSOR VALUE →

$\theta m$

RELATIVE STEERING ANGLE CALCULATING PART — 21

$\theta r$  +  −

INITIAL VALUE $\theta r_0$

$\theta r_d$

MOTOR VOLTAGE BETWEEN TERMINALS →

Vm

STEERING ANGULAR VELOCITY ESTIMATING PART — 22

$\omega e$

ESTIMATED STEERING ANGLE CALCULATING PART — 23

$\theta e$  +  −

INITIAL VALUE $\theta e_0$

$\theta e_d$

MOTOR CURRENT →

Im

EP 1 839 995 A2

## REFERENCES CITED IN THE DESCRIPTION

**Patent documents cited in the description**

- JP 2002104211 A
- JP 2005098827 A
- JP 2005165235 A